# EUROPÄISCHE PATENTSCHRIFT

(11) **EP 3 347 256 B1**
(45) Veröffentlichungstag und Bekanntmachung des Hinweises auf die Patenterteilung: **17.02.2021**
(21) Anmeldenummer: 16812726.4
(22) Anmeldetag: 14.12.2016
(51) Int. Cl.: B61D 17/04, B60R 16/06

(54) **SCHIENENFAHRZEUGWAGENKASTEN MIT EINER ERDUNGSVERBINDUNGSSTELLE**
RAIL VEHICLE BODY COMPRISING AN EARTHING POINT
CAISSE DE VÉHICULE FERROVIAIRE MUNIE D'UN POINT DE RACCORDEMENT À LA TERRE

(30) Priorität: 16.12.2015 AT 510702015
(43) Veröffentlichungstag der Anmeldung: 18.07.2018
(73) Patentinhaber: Siemens Mobility Austria GmbH, 1210 Wien (AT)
(72) Erfinder: HALLING, Philipp, 1120 Wien (AT); JÜLY, Martin, 2433 Margarethen/Moos (AT); KRIVAN, Thomas, 1220 Wien (AT)
(74) Vertreter: Deffner, Rolf
(86) Internationale Anmeldenummer: PCT/EP2016/080915
(87) Internationale Veröffentlichungsnummer: WO 2017/102803

(56) Entgegenhaltungen:
- EP-A1- 2 894 719
- EP-A2- 2 705 996
- DE-A1- 19 603 511

## Beschreibung

Schienenfahrzeugwagenkasten mit einer Erdungsverbindungsstelle.

### Technisches Gebiet

Die Erfindung betrifft einen Schienenfahrzeugwagenkasten in Integralbauweise mit einer Erdungsverbindungsstelle.

### Stand der Technik

An Schienenfahrzeugwagenkästen angeordnete Einrichtungen wie sogenannte Antriebscontainer, Klimaanlagen und ähnliche Ausrüstungen sind galvanisch mit dem metallischen Wagenkasten zu verbinden. Dazu werden je Einrichtung ein oder mehrere Erdungsseile (flexible elektrische Leitungen) eingesetzt die jeweils mit dem Wagenkasten leitend verbunden sind. Moderne Wagenkästen werden meist in Integralbauweise aufgebaut, bei welcher eine Vielzahl an Strangpreßprofilen aus Leichtmetall miteinander verschweißt den Wagenkasten bilden. An diesen Wagenkästen können die Erdungsseile, welche typischerweise an ihrem Ende mit einem Kabelschuh ausgestattet sind mittels einer Schraub- oder Klemmverbindung befestigt werden. Zur Herstellung dieser Verbindungsstelle sind wagenkastenseitig geeignete Vorkehrungen erforderlich. Typischerweise sind an geeigneter Position Laschen angeschweißt, welche mit Bohrungen für eine Schraubverbindung ausgestattet sind. Das Anschweißen dieser laschen ist ein kritischer, nur manuell ausführbarer Arbeitsschritt, welcher jedenfalls durch die Wärmeeinbringung eine Schwächung der lokalen Festigkeit des Leichtmetallprofils bewirkt. Weiters ist es bei Leichtmetallprofilen mit Wandstärken kleiner als 4mm nicht empfehlenswert manuelle Schweißverbindungen herzustellen. Alternative Schweißverfahren mit geringerem Wärmeeintrag wie Laser- oder Reibrührschweißen bedingen einen hohen maschinellen Aufwand und sind für diesen Einsatzzweck zu aufwendig. Nachteilig an dieser Lösung ist auch, dass bereits an dem Rohbau des Wagenkastens jede Erdungsverbindung festgelegt ist, eine Verlegung eines solchen dadurch mit hohem Aufwand verbunden ist. Dies kann bei nachträglichen Änderungen an den Einrichtungen des Schienenfahrzeugs oder bei der Herstellung unterschiedlicher Ausstattungsvariationen aus einem Wagenkastentyp nachteilig sein. Eine weitere Möglichkeit der Kontaktierung der Erdungsseile ohne Schweißverbindung besteht darin, eine geeignete Klemme in einer C-Nut des Wagenkastens anzuordnen. Dazu sind einerseits weitere Bauteile, sogenannte Erdungsklemmen erforderlich, andererseits muß eine C-Nut in unmittelbarer Umgebung der zu erdenden Einrichtung vorhanden sein. Der unmittelbare Befestigungsbereich an dieser C-Nut ist von isolierenden Beschichtungen freizuhalten, eine solche muß bei einer Änderung des Erdungsanschlusses an der neuen Erdungsstelle entfernt werden.

Das Dokument DE 196 03 511 A1 beschreibt einen Schienenfahrzeugwagenkasten in Integralbauweise, umfassend mindestens eine elektrische Erdungsverbindungsstelle, wobei Erdungsteile beschrieben sind, welche mittels Schraubverbindungen in C-Nuten befestigt sind und an welchen Befestigungsstellen für Erdungskabel angeordnet sind.

### Darstellung der Erfindung

Der Erfindung liegt daher die Aufgabe zugrunde, einen Schienenfahrzeugwagenkasten in Integralbauweise mit einer Erdungsverbindungsstelle anzugeben, welcher kostengünstig herstellbar ist und bei welchem die Erdungsverbindungsstelle einfach an eine andere Position verlegbar ist.

Die Aufgabe wird durch einen Schienenfahrzeugwagenkasten in Integralbauweise mit den Merkmalen des Anspruchs 1 gelöst. Vorteilhafte Ausgestaltungen sind Gegenstand untergeordneter Ansprüche.

Dem Grundgedanken der Erfindung nach wird ein Schienenfahrzeugwagenkasten in Integralbauweise aufgebaut, welcher mindestens eine elektrische Erdungsverbindungsstelle umfasst, wobei die elektrische Erdungsverbindungsstelle als Bohrung in einer Ausformung eines der den Schienenfahrzeugwagenkasten bildenden Strangpreßprofile ausgebildet ist.

Dadurch ist der Vorteil erzielbar, die erforderlichen Erdungsverbindungsstellen, insbesondere am Untergestell des Schienenfahrzeugs bereits bei der Fertigung des Rohbaus des Schienenfahrzeugwagenkastens herstellen zu können, sodass keine Schweißungen an dem Rohbau erforderlich sind. Dies ist insbesondere vorteilhaft, da bei dünnwandigen Strangpreßprofilen diese Schweißungen nur sehr aufwendig und mit großem Beschädigungsrisiko herstellbar sind.
Weiters können die Erdungsverbindungsstellen (Massepunkte) flexibel verändert werden, wenn beispielsweise Änderungen der Anordnung der Einrichtungen am Wagenkasten erforderlich sind oder wenn aus einem Wagenkastentyp unterschiedlich ausgestattete Fahrzeuge gebaut werden sollen, welche jeweils unterschiedliche oder unterschiedlich angeordnete Einrichtungen umfassen.

Erfindungsgemäß ist bei einem Schienenfahrzeugwagenkasten in Integralbauweise mindestens eines der den Wagenkasten bildenden Strangpreßprofile mit einer Ausformung zu versehen. Diese Ausformung kann bei der Herstellung dieses Strangpreßprofils sehr einfach vorgesehen werden, da nur eine geringe Änderung der Preßmatritze erforderlich ist. In diese Ausformung kann an beliebiger Stelle eine Bohrung angebracht werden ohne die tragenden Teile des Strangpreßprofils zu beeinträchtigen. Die den Wagenkasten bildenden Strangpreßprofile sind praktisch immer als geschlossene Mehrkammerhohlprofile ausgebildet, bei welchen eine Bohrung in eine der Kammern auch die Dichtheit des Profils gefährden könnte. Außerdem erlaubt die geringe Wandstärke gebräuchlicher Profile kein Schneiden eines Gewindes in eine Profilwand, sodass geeignete dickwandigere Teile einzuschweißen wären.
Mit gegenständlicher Erfindung kann die Integrität der Strangpreßprofile bewahrt bleiben, da die Bohrung in der Ausformung angeordnet ist und somit
Herkömmliche Masseanschlüsse mittels einem Kabelschuh und einer gegen lösen gesicherten Schraubverbindung eingesetzt werden können.

Weiters ist es vorteilhaft, dass mit gegenständlicher Erfindung die Anordnung der Erdungsverbindungsstellen in Hinsicht auf rasche und einfache Montage erfolgen kann.

Die Ausformung kann auf unterschiedliche Arten gestaltet sein, wobei jedenfalls gerade Abschnitte der Ausformung vorhanden sein müssen um eine ebene Auflagefläche für die Erdungsverbindung zu bieten.
Insbesondere sind Ausformungen mit einem I- oder L- oder T-förmigen Querschnitt vorteilhaft, wobei auch zwei zueinander gewinkelte gerade Abschnitte als Querschnitt der Ausformung vorteilhaft sind.

Die Erfindung sieht vor, die Ausformung in bestimmten Bereichen entlang der Längserstreckung des Strangpreßprofile mittels eines mechanischen Bearbeitungsverfahrens abzutragen. Dies ist insbesondere vorteilhaft, wenn der Schienenfahrzeugwagenkasten mit besonders geringem Gewicht ausgeführt werden soll. Allerdings weist diese Ausführungsform eine reduzierte Flexibilität bei Änderungen der Erdungsverbindungsstellen auf.

### Kurzbeschreibung der Zeichnungen

Es zeigen beispielhaft:
**Fig.1** Strangpreßprofil mit einer L-förmigen Ausformung.
**Fig.2** Strangpreßprofil mit einer I-förmigen Ausformung.
**Fig.3** Strangpreßprofil mit einer gewinkelten Ausformung.
**Fig.4** Strangpreßprofil mit einer T-förmigen Ausformung.

### Ausführung der Erfindung

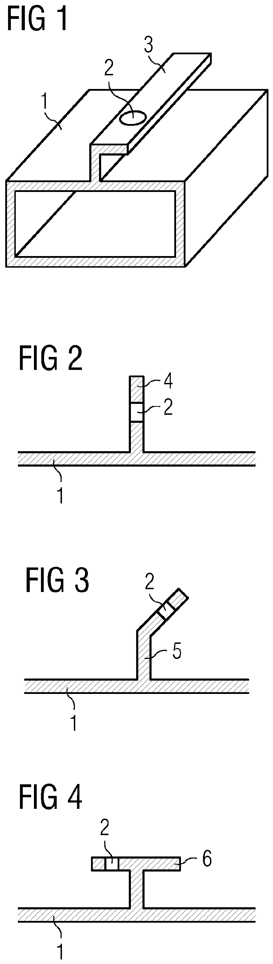

**Fig.1** zeigt beispielhaft und schematisch ein Strangpreßprofil mit einer L-förmigen Ausformung. Es ist eine stark abstrahierte Schrägdarstellung eines Strangpreßprofils 1 dargestellt, welches beispielsweise in einem Verbund mit weiteren, ähnlich geformten Profilen ein Untergestell eines Schienenfahrzeugs bildet. Das Strangpreßprofil 1 ist mit einer Ausformung 3 mit L-förmigen Querschnitt ausgestattet, welche beim Herstellungsprozeß des Strangpreßprofils 1 einstückig mit den weiteren Abschnitten des Profilquerschnitts geformt ist. In einen Schenkel der L-förmigen Ausformung 3 ist eine Bohrung 2 eingebracht, mittels welcher ein Massekabel mit den gebräuchlichen Befestigungsmitteln (Kabelschuh, Schraubverbindung) lösbar befestigbar ist.

**Fig.2** zeigt beispielhaft und schematisch ein Strangpreßprofil mit einer I-förmigen Ausformung. Es ist ein Schnitt durch ein Strangpreßprofil 1 dargestellt, wobei die Ausformung 4 einen geraden, I-förmigen Querschnitt aufweist.

**Fig.3** zeigt beispielhaft und schematisch ein Strangpreßprofil mit einer gewinkelten Ausformung. Es ist ein Schnitt durch ein Strangpreßprofil 1 dargestellt, wobei die Ausformung 5 zwei gerade, zueinander gewinkelte Abschnitte aufweist. In gezeigtem Ausführungsbeispiel ist eine Bohrung 2 in den zweiten, dem Strangpreßprofil 1 abgewandten Abschnitt eingebracht.

**Fig.4** zeigt beispielhaft und schematisch ein Strangpreßprofil mit einer T-förmigen Ausformung. Es ist ein Schnitt durch ein Strangpreßprofil 1 dargestellt, wobei die Ausformung 6 einen T-förmigen Querschnitt aufweist. Diese Ausführungsform bietet eine höhere Flexibilität in der Anordnung der Bohrung 2 und trägt auch markant zur Steifigkeit des Strangpreßprofils 1 bei.

### Liste der Bezeichnungen

- 1: Strangpreßprofil
- 2: Bohrung
- 3: L-förmige Ausformung
- 4: I-förmige Ausformung
- 5: gewinkelte Ausformung
- 6: T-förmige Ausformung

## Patentansprüche

1. Schienenfahrzeugwagenkasten in Integralbauweise, umfassend mindestens eine elektrische Erdungsverbindungsstelle,
**dadurch gekennzeichnet, dass**
die Erdungsverbindungsstelle als Bohrung (2) in einer Ausformung (3, 4, 5, 6) eines der den Schienenfahrzeugwagenkasten bildenden Strangpreßprofile (1) ausgebildet ist,
wobei die Ausformung (3, 4, 5, 6) in bestimmten Bereichen entlang der Längserstreckung des Strangpreßprofils (1) mittels eines mechanischen Bearbeitungsverfahrens abgetragen ist.

2. Schienenfahrzeugwagenkasten nach Anspruch 1,
**dadurch gekennzeichnet, dass** die Ausformung (6) einen T-förmigen Querschnitt aufweist.

3. Schienenfahrzeugwagenkasten nach Anspruch 1,
**dadurch gekennzeichnet, dass** die Ausformung (4)einen I-förmigen Querschnitt aufweist.

4. Schienenfahrzeugwagenkasten nach Anspruch 1,
**dadurch gekennzeichnet, dass** der Querschnitt der Ausformung (5) zwei zueinander gewinkelte gerade Abschnitte aufweist.

5. Schienenfahrzeugwagenkasten nach Anspruch 1,
**dadurch gekennzeichnet, dass** die Ausformung (3) einen L-förmigen Querschnitt aufweist.

## Claims

1. Integrally built rail vehicle body, comprising at least one electrical earthing point,
**characterised in that**
the earthing point is designed as a bore hole (2) in a shaped portion (3, 4, 5, 6) of one of the extruded profiles (1) forming the rail vehicle body,
wherein the shaped portion (3, 4, 5, 6) is ablated in certain areas along the longitudinal extension of the extruded profile (1) by means of a mechanical machining process.

2. Rail vehicle body according to claim 1,
**characterised in that** the shaped portion (6) has a T-shaped cross-section.

3. Rail vehicle body according to claim 1,
**characterised in that** the shaped portion (4) has an I-shaped cross-section.

4. Rail vehicle body according to claim 1,
**characterised in that** the cross-section of the shaped portion (5) has two straight sections angled towards one another.

5. Rail vehicle body according to claim 1,
**characterised in that** the shaped portion (3) has an L-shaped cross-section.

## Revendications

1. Caisse de véhicule ferroviaire en construction monobloc, comportant au moins un point de connexion à la terre électrique,
**caractérisée en ce que**
le point de connexion à la terre est prévu sous forme de perçage (2) dans une protubérance (3, 4, 5, 6) d'un des profilés extrudés (1) constituant la caisse de véhicule ferroviaire,
la protubérance (3, 4, 5, 6) étant décapée dans certaines zones le long de l'extension longitudinale du profilé extrudé (1) à l'aide d'un procédé d'usinage mécanique.

2. Caisse de véhicule ferroviaire selon la revendication 1, **caractérisée en ce que** la protubérance (6) présente une section en forme de T.

3. Caisse de véhicule ferroviaire selon la revendication 1, **caractérisée en ce que** la protubérance (4) présente une section en forme de I.

4. Caisse de véhicule ferroviaire selon la revendication 1, **caractérisée en ce que** la section de la protubérance (5) présente deux portions droites angulaires l'une vis-à-vis de l'autre.

5. Caisse de véhicule ferroviaire selon la revendication 1, **caractérisée en ce que** la protubérance (3) présente une section en forme de L.
